# EUROPEAN PATENT SPECIFICATION

(11) **EP 3 407 124 B1**
(45) Date of publication and mention of the grant of the patent: **22.07.2020**
(21) Application number: 17172550.0
(22) Date of filing: 23.05.2017
(51) Int. Cl.: G02F 1/1334, G02F 1/139, G02F 1/1333, G02F 1/137

(54) **LIDQUID CRYSTAL WRITING FILM, AND METHOD AND DEVICE FOR PREPARATION OF LIQUID CRYSTAL WRITING FILM**
FLÜSSIGKRISTALLSCHREIBFILM SOWIE VERFAHREN UND VORRICHTUNG ZUR HERSTELLUNG VON FLÜSSIGKRISTALLSCHREIBFILM
FILM D'ÉCRITURE À CRISTAUX LIQUIDES ET PROCÉDÉ ET DISPOSITIF DE PRÉPARATION D'UN FILM D'ÉCRITURE À CRISTAUX LIQUIDES

(43) Date of publication of application: 28.11.2018
(73) Proprietor: Shenzhen Wicue Optoelectroncis, Co. Ltd, Shenzhen, Guangdong (CN)
(72) Inventor: Li, Fenghua, Nanshan District, Shenzhen, Guangdong (CN)
(74) Representative: Gulde & Partner

(56) References cited:
- EP-A2- 1 370 902
- US-A1- 2002 113 937
- US-A1- 2016 342 023

## Description

### Technical Field

The present invention relates to the field of liquid crystal displays, and specifically relates to a liquid crystal writing film, and a method and device for preparation of the liquid crystal writing film.

### Description of Related Art

Generally, a liquid crystal writing film includes a first base layer, a first electrode layer, a liquid crystal layer, a second electrode layer and a second base layer that are disposed in sequence, wherein the liquid crystal layer comprises a high polymer material and liquid crystal molecules; and the high polymer material is cross-linked to form a grid structure for the location of the liquid crystal molecules in the grid and also for binding of various layers. When displaying on the liquid crystal writing film, it is required that the liquid crystal molecules be rotated to a P state (planar texture state), thereby reflecting light of particular wavelengths. In the prior art, a high polymer monomer may be mixed with liquid crystal molecules for spreading to form the liquid crystal layer that may have a close-packed grid structure after being cured, leading to a low degree of freedom of some liquid crystal molecules which, consequently, cannot be rotated to the desired state successfully to reflect light, thus resulting in low brightness of the liquid crystal writing film.

US 2016/342023 discloses a liquid crystal writing film and forms the basis for the appended independent claims.

EP 1370902 discloses a reflective circular polarizer and a method for producing the reflective circular polarizer containing a cholesteric liquid crystal polymer with non-uniform pitch, wherein in a first step, a layer of a liquid crystal polymer is coated on a substrate, then a layer of chiral monomers is coated on the first layer. The chiral monomer is diffused in the layer of liquid crystal to produce a layer of cholesteric liquid crystal with non-uniform pitch, and the layers are then cured.

US 2002/113937 discloses reflective optical polarizers formed by simultaneous coating of two or more layers of cholesteric liquid crystals or cholesteric liquid crystal precursors.

### Brief Summary of the Invention

To solve the above-mentioned technical problem, the present invention provides a liquid crystal writing film of high brightness, as defined in appended claim 1, comprising a first base film, a composite layer and a second base film that are disposed in sequence. The first base film comprises a first base layer and a first electrode layer disposed in sequence, with the first base layer serving as a writing surface, and the second base film comprises a second electrode layer and a second base layer disposed in sequence, with the composite layer being disposed between the first electrode layer and the second electrode layer. The composite layer comprises a first hybrid layer of which one side is laminated with the first electrode layer. The first hybrid layer comprises liquid crystal molecules and a high polymer material, with the content of the high polymer material in the first hybrid layer decreasing gradually from the side far away from the first electrode layer to the side close to the first electrode layer.

Preferably, the composite layer also comprises a high polymer material layer located between the first hybrid layer and the second electrode layer.

Preferably, the composite layer also comprises a second hybrid layer located between the high polymer material layer and the second electrode layer. The second hybrid layer comprises liquid crystal molecules and a high polymer material, with the content of the high polymer material in the second hybrid layer decreasing gradually from the side close to the high polymer material layer to the side close to the second electrode layer.

Preferably, the high polymer material layer is made from a high polymer material. Alternatively, the high polymer material layer comprises a high polymer material and liquid crystal molecules, with the content of the liquid crystal molecules in the high polymer material layer being less than that of the liquid crystal molecules in each of the first hybrid layer and the second hybrid layer.

Preferably, the first hybrid layer also comprises a chiral dopant.

Preferably, the chiral dopant accounts for 25-35% of the total quantity of the liquid crystal molecules and the chiral dopant such that the writing display on the liquid crystal writing film comes in green when viewed from the front and in blue when viewed from the sides. Alternatively, the chiral dopant accounts for 6-15% of the total quantity of the liquid crystal molecules and the chiral dopant such that the writing display on the liquid crystal writing film comes in yellow when viewed from the front and in green when viewed from the sides.

The present invention further provides a method for preparation of a liquid crystal writing film, as defined in appended claim 7, comprising the steps of: providing a first base film comprising a first electrode layer and a second base film comprising a second electrode layer; spreading liquid crystals on the first base film to form a first liquid crystal coating; spreading an uncured high polymer material on the first liquid crystal coating to form a high polymer material coating; laminating the second base film and the first base film to form a semi-finished film with the first liquid crystal coating and the high polymer material coating being located between the first electrode layer of the first base film and the second electrode layer of the second base film; controlling the first liquid crystal coating and the high polymer material coating to diffuse for 10 seconds to 3 minutes based on an environmental temperature to form a first hybrid coating; and curing the semi-finished film.

Preferably, the first liquid crystal coating and the high polymer material coating are formed through sequential spreading. Alternatively, the first liquid crystal coating and the high polymer material coating are formed simultaneously via once-through spreading.

Preferably, prior to the step of laminating the second base film and the first base film to form a semi-finished film with the first liquid crystal coating and the high polymer material coating being located between the first base film and the second base film, the method also comprises: spreading liquid crystals on the high polymer material coating to form a second liquid crystal coating.

The second liquid crystal coating is also located between the first base film and the second base film in the step of laminating the second base film and the first base film to form a semi-finished film with the first liquid crystal coating and the high polymer material coating being located between the first base film and the second base film.

The second liquid crystal coating and the high polymer material coating diffuse for 10 seconds to 3 minutes to form a second hybrid coating in the step of controlling the first liquid crystal coating and the high polymer material coating to diffuse for 10 seconds to 3 minutes based on an environmental temperature to form a first hybrid coating.

The present invention further also provides a device for preparation of a liquid crystal writing film, as defined in appended claim 10, comprising a spreading platform, a spreading unit, a laminating unit, a unit and a curing unit. The spreading platform is configured to carry a first base film comprising a first electrode layer; the spreading unit is provided with a plurality of independent flow channels for spreading that are configured for spreading of liquid crystals and spreading of an uncured high polymer material, respectively; the laminating unit is disposed at one side of the spreading platform to laminate a second base film and the first base film; the unit carrying out the step of controlling the first liquid crystal coating and the high polymer material coating to diffuse for 10 seconds to 3 minutes based on environmental temperature; and the curing unit is disposed on the side of the laminating unit that is far away from the spreading unit to cure a laminated liquid crystal writing film.

Preferably, the spreading unit comprises a plurality of first pipes, with every two adjacent first pipes being spaced apart by a distance and an internal passage of each of the first pipes constituting one of the flow channels for spreading; and a first nozzle is disposed at an end of each of the first pipes.

Preferably, the spreading unit comprises a second pipe inside which a plurality of independent passages are formed, with each of the passages constituting one of the flow channels for spreading; and a second nozzle is disposed at an end of the second pipe, which is provided with a plurality of outlets, with each of the outlets communicating with an independent cavity and each of the cavities communicating with one of the passages.

According to the technical solutions of the present invention, the content of the high polymer material in the first hybrid layer is set to decrease gradually from the side far away from the first electrode layer to the side close to the first electrode layer, leading to a relatively sparse grid structure of high polymers formed close to the first electrode layer and significantly improved degree of freedom of the liquid crystal molecules close to the first electrode layer; and with the first base layer serving as the writing surface, more liquid crystal molecules close to the writing surface can be rotated to the desired state successfully to achieve the reflection of light of particular wavelengths, thus allowing significant improvement in the brightness of the corresponding liquid crystal writing film.

### Detailed Description of the Drawings

Fig. 1 is a structural diagram of an embodiment of a liquid crystal writing film of the present invention;
Fig. 2 is a structural diagram of another embodiment of the liquid crystal writing film of the present invention;
Fig. 3 is a structural diagram of yet another embodiment of the liquid crystal writing film of the present invention;
Fig. 4 is a flow diagram of an embodiment of a method for preparation of the liquid crystal writing film of the present invention;
Fig. 5 is a flow diagram of another embodiment of the method for preparation of the liquid crystal writing film of the present invention;
Fig. 6 is a structural diagram of an embodiment of a device for preparation of the liquid crystal writing film of the present invention;
Fig. 7 is a structural diagram of another embodiment of the device for preparation of the liquid crystal writing film of the present invention;

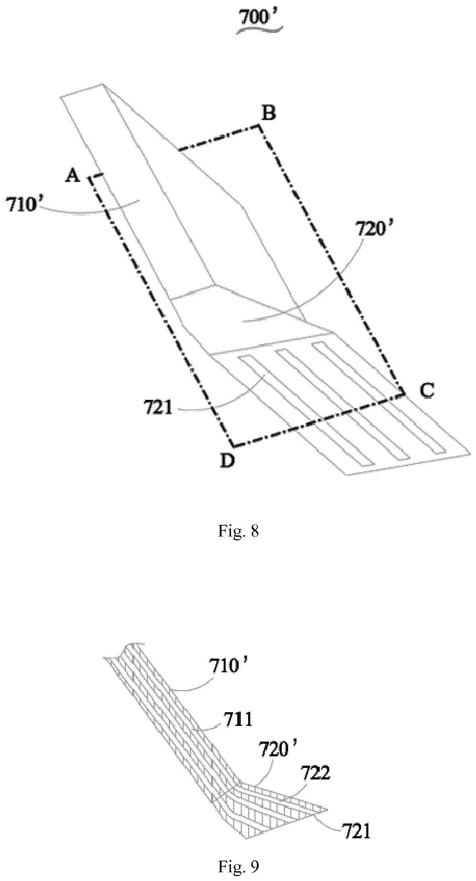

Fig. 8 is a structural diagram of a spreading unit in the device for preparation of the liquid crystal writing film as shown in Fig. 7; and
Fig. 9 is a structural diagram of section A-B-C-D of the spreading unit as shown in Fig. 8.

Reference numerals are specified below:

| Reference Numeral | Name | Reference Numeral | Name |
|---|---|---|---|
| 100 | First base film | 200 | Second base film |
| 300 or 300' or 300" | Composite layer | 110 | First base layer |
| 120 | First electrode layer | 210 | Second electrode layer |
| 220 | Second base layer | 310 | First hybrid layer |
| 320 | High polymer material layer | 330 | Second hybrid layer |
| 301 | First liquid crystal coating | 302 | High polymer material coating |
| 303 | Second liquid crystal coating | 600 | Spreading platform |
| 700 or 700' | Spreading unit | 800 | Laminating unit |
| 900 | Curing unit | 710 | First pipe |
| 720 | First nozzle | 710' | Second pipe |
| 720' | Second nozzle | 711 | Passage |
| 721 | Outlet | 722 | Cavity |

### Detailed Description of the Invention

In order to explain the technical solutions of the present invention more clearly, the technical solutions in various embodiments of the present invention will be described in detail below in conjunction with the accompanying drawings. While the description often refers to embodiments and to the invention, it is to be understood that the invention is defined by the appended claims and the embodiments of the invention are those which comprise at least all the features of one of the independent claims.

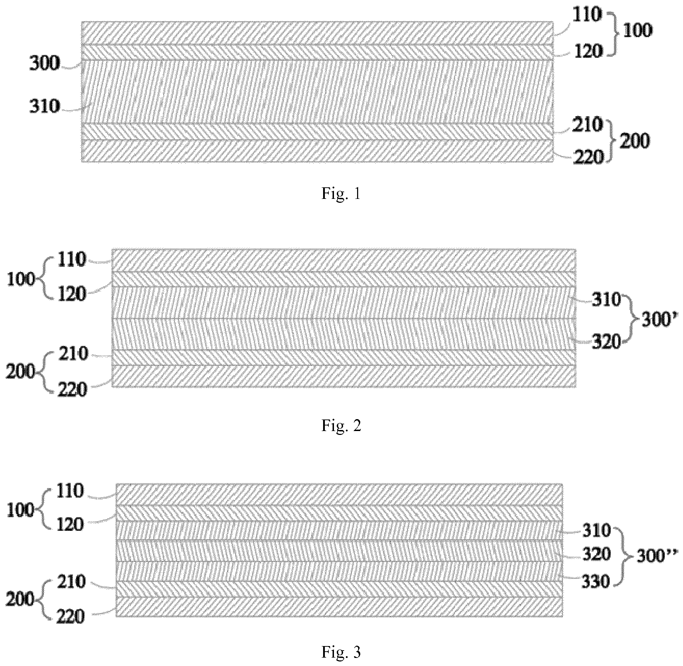

As shown in Fig. 1, the present invention provides a liquid crystal writing film comprising a first base film 100, a composite layer 300 and a second base film 200 that are disposed in sequence. The first base film 100 comprises a first base layer 110 and a first electrode layer 120 disposed in sequence, with the first base layer 110 serving as a writing surface, and the second base film 200 comprises a second electrode layer 210 and a second base layer 220 disposed in sequence, with the composite layer 300 being disposed between the first electrode layer 120 and the second electrode layer 210. The composite layer 300 comprises a first hybrid layer 310 of which one side is laminated with the first electrode layer 120. The first hybrid layer 310 comprises liquid crystal molecules and a high polymer material, with the content of the high polymer material in the first hybrid layer 310 decreasing gradually from the side far away from the first electrode layer 120 to the side close to the first electrode layer 120.

According to the technical solution of the present invention, the content of the high polymer material in the first hybrid layer 310 is set to decrease gradually from the side far away from the first electrode layer 120 to the side close to the first electrode layer 120, leading to a relatively sparse grid structure of high polymers formed close to the first electrode layer 120 and significantly improved degree of freedom of the liquid crystal molecules close to the first electrode layer 120; and under this circumstance, with the first base layer 100 serving as the writing surface, more liquid crystal molecules close to the writing surface can be rotated to the desired state successfully to achieve the reflection of light of particular wavelengths, thus allowing significant improvement in brightness of the corresponding liquid crystal writing film.

The first base layer 110 and the second base layer 220 therein, which are flexible film layers made of transparent plastics, are preferably PET films in this embodiment, and under this circumstance, the liquid crystal writing film has good overall flexibility, allowing patterns to be formed thereon by writing with light pressure. A first conducting layer and a second conducting layer are conducting films made from ITO. The liquid crystals in the first hybrid layer 310 are cholesteric liquid crystals that have a zero-field bistable state and can meet the requirement of writing. The high polymer material is a high polymer of a grid structure formed through monomer polymerization, which is used for, in one aspect, immobilization of the liquid crystal molecules, and in another aspect, also for binding of the liquid crystal writing film.

Referring to Fig. 2, in another embodiment of the present invention, for tighter binding of the second electrode layer 210 and the composite layer 300, the composite layer 300' is set to also comprise a high polymer material layer 320 located between the first hybrid layer 310 and the second electrode layer 210. The high polymer material layer 320 is obtained by curing a high polymer binder, which mainly serves for binding.

To further improve the brightness, referring to Fig. 3, the composite layer 300" also comprises a second hybrid layer 330 located between the high polymer material layer 320 and the second electrode layer 210. The surface of the second hybrid layer 330 that is on the back of the high polymer material layer 320 is laminated with the second electrode layer 210. The second hybrid layer 330 comprises liquid crystal molecules and a high polymer material, with the content of the high polymer material in the second hybrid layer 330 decreasing gradually from the side close to the high polymer material layer 320 to the side close to the second electrode layer 210. Under this circumstance, the grid structure of high polymers of the second hybrid layer 330 that is formed close to the second electrode layer 210 is relatively sparse with a significantly improved degree of freedom of the liquid crystal molecules located close to the second electrode layer 210; and here, more liquid crystal molecules of the liquid crystal molecules located close to the second electrode layer 210 can be successfully rotated to the desired state to achieve the reflection of light of particular wavelengths, thus allowing further improvement in the brightness of the corresponding liquid crystal writing film. The high polymer material layer 320 therein is used for binding of the first hybrid layer 310 and the second hybrid layer 330. The strength of the composite layer 300 may thus be improved. The high polymer material layer 320 may be made from a pure high polymer material. Alternatively, the high polymer material layer 320 may also comprise liquid crystal molecules and a high polymer material, and under this circumstance, the content of the liquid crystal molecules in the high polymer material layer 320 is less than that of the liquid crystal molecules in the first hybrid layer, and also less than that of the liquid crystal molecules in the second hybrid layer. The two setting modes can both satisfy the binding need of the high polymer material layer 320, and thus may both regarded as optional solutions.

Certainly, more liquid crystal layers may be disposed. For example, the composite layer 300 may also comprise a third hybrid layer and another high polymer material layer disposed in sequence between the high polymer material layer 320 and the second hybrid layer 330. The third hybrid layer comprises liquid crystal molecules and a high polymer material, with the content of the high polymer material in the third hybrid layer increasing gradually from the central portion to two surfaces. By adding more liquid crystal layers, the number of the liquid crystal molecules having high degree of freedom can be further increased with improved brightness of the liquid crystal writing film.

In the above embodiment, the first hybrid layer 310 also comprises a chiral dopant that is capable of transforming the liquid crystals into the cholesteric liquid crystals, and the content of the chiral dopant may be adjusted to allow the cholesteric liquid crystals to reflect light of particular wavelengths such that the writing display on the liquid crystal writing film comes in different colors with a better display effect achieved. In order to reduce eye fatigue, the chiral dopant may be set to account for 25-35% of the total quantity of the liquid crystal molecules and the chiral dopant, such that the writing display on the liquid crystal writing film comes in green when viewed from the front and in blue when viewed from the sides, thereby reducing the burden for human eyes, and therefore, the liquid crystal writing film may be more suitable for users using their eyes for a long time. Specifically, the chiral dopant may be S811 (model) or R811 (model) and account for about 30% of the total quantity of the liquid crystals. To improve display contrast, the chiral dopant may be set to account for 6-15% of the total quantity of the liquid crystal molecules and the chiral dopant, such that the writing display on the liquid crystal writing film comes in yellow when viewed from the front and in green when viewed from the sides; and under this circumstance, a user can clearly see writing on the liquid crystal writing film at a long distance and the requirement of long distance viewing can be well met. Specifically, the chiral dopant may be a mixture of R1011 and R811, and account for about 10% of the total quantity of the liquid crystals.

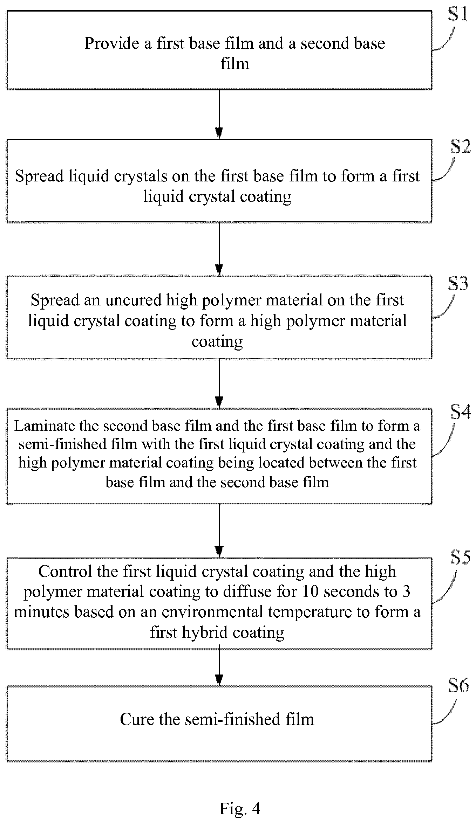

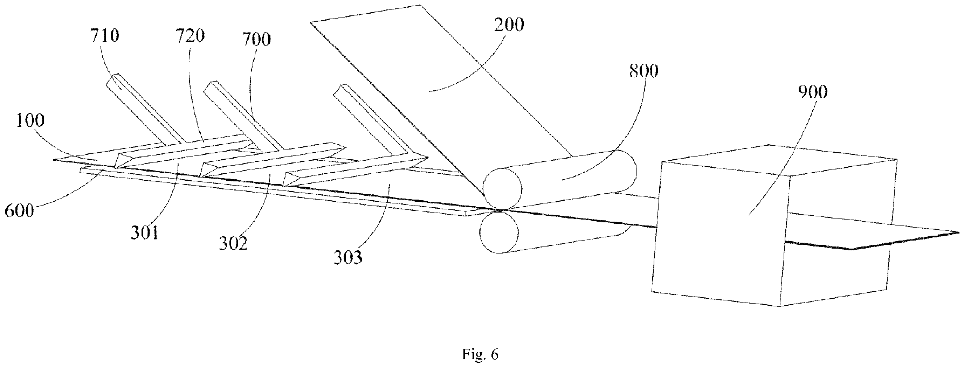

Referring to Fig. 4 in conjunction with Fig. 6 for understanding, the present invention further provides a method for preparation of the liquid crystal writing film, which comprises steps as follows:
S1, a first base film 100 and a second base film 200 are provided.

The first base film 100 comprises a first base layer 110 and a first electrode layer 120 formed on the first base layer 110, with the surface provided with the first electrode layer 120 being the front.

The second base film 200 comprises a second base layer 220 and a second electrode layer 210 formed on the second base layer 220, with the surface provided with the second electrode layer 210 being the front.

S2, liquid crystals are spread on the first base film 100 to form a first liquid crystal coating 301.

Cholesteric liquid crystals are chosen as the liquid crystals that may be spread directly to form the desired first liquid crystal coating 301.

S3, an uncured high polymer material is spread on the first liquid crystal coating 301 to form a high polymer material coating 302.

A common high polymer binder in the field of liquid crystal display is chosen as the high polymer material. The uncured high polymer material is not cross-linked into network yet, which comprises some flowable monomer and prepolymer, and under this circumstance, the monomer and prepolymer in the high polymer material coating 302 may be mixed with the liquid crystals in the first liquid crystal coating 301.

S4, the second base film 200 and the first base film 100 are laminated to form a semi-finished film with the first liquid crystal coating 301 and the high polymer material coating 302 being located between the first base film 100 and the second base film 200. When laminating, the second electrode layer 210 on the second base film 200 is oriented toward the first base film 100.

S5, the first liquid crystal coating 301 and the high polymer material coating 302 are controlled to diffuse for 10 seconds to 3 minutes based on an environmental temperature to form a first hybrid coating.

S6, the semi-finished film is cured.

After the lamination of the first base film 100 and the second base film 200, the monomer and prepolymer in the high polymer material coating 302 diffuse into the first liquid crystal coating 301, and after diffusing for a period of time, the first liquid crystal coating 301 and the high polymer material coating 302 are turned into the first hybrid coating through diffusion. Next, curing is carried out, thereby obtaining the liquid crystal writing film as shown in Fig. 1 or Fig. 2. Specifically, in case of relatively long diffusion time, the liquid crystal writing film as shown in Fig. 1 may be obtained; under this circumstance, the high polymer material coating 302 and the first liquid crystal coating 301 may be completely mixed with each other, but not uniformly; here, the content of the high polymer material in the first hybrid coating degreases gradually from the side far away from the first electrode layer 120 to the side close to the first electrode layer 120; and after curing, the first hybrid coating is turned into a first hybrid layer 310. In a case of relatively short diffusion time, the liquid crystal writing film as shown in Fig. 2 may be obtained; under this circumstance, the high polymer material coating 302 and the first liquid crystal coating 301 are not completely mixed with each other, and instead, the first liquid crystal coating 301 is mixed with one part of the high polymer material coating 302 to form the first hybrid coating, leaving the other part of the high polymer material coating 302 unmixed with the first liquid crystal coating 301; and after curing, the part of the high polymer material coating 302 that is unmixed with the first liquid crystal coating 301 is turned into a high polymer material layer 320, while the first hybrid coating is turned into the first hybrid layer 310. Certainly, if the diffusion time is too long, the high polymer material coating 302 and the first liquid crystal coating 301 may be mixed with each other completely and uniformly, leading to a failure in obtaining the corresponding liquid crystal writing film; therefore, the diffusion time is controlled to the range of 10 seconds to 3 minutes in the present invention. The specific diffusion time is selected depending on the diffusion environment. The main factor among the environmental factors is environmental temperature. Specifically, in case of a relatively high temperature, the diffusion time needed is relatively short; and in case of a relatively low temperature, the diffusion time needed is relatively long. In actual operation, the diffusion time may be selected reasonably within the time range as the circumstances may require.

According to the method for preparation of the liquid crystal writing film of the present invention, after the first liquid crystal coating 301 is formed on the front of the first base film 100 from the liquid crystals, the high polymer material coating 302 is formed on the first liquid crystal coating 301 from the uncured high polymer material, and finally, curing is carried out after diffusing for a period of time, thereby obtaining the liquid crystal writing film of the present invention. The liquid crystal writing film prepared by means of this method comprises the first hybrid layer 310, with the content of the high polymer material in the first hybrid layer 310 decreasing gradually from the side far away from the first electrode layer 120 to the side close to the first electrode layer 120, leading to a relatively sparse grid structure of high polymers formed close to the first electrode layer 120 and significantly improved degree of freedom of the liquid crystal molecules close to the first electrode layer 120; and under this circumstance, more liquid crystal molecules of the liquid crystal molecules close to the first electrode layer 120 can be rotated to the desired state successfully to achieve the reflection of light of particular wavelengths, thus allowing significant improvement in the brightness of the corresponding liquid crystal writing film.

The first liquid crystal coating 301 and the high polymer material coating 302 may be formed through sequential spreading. In this way, the high polymer material coating 302 may be formed after the first liquid crystal coating 301 becomes flat, thus allowing good stability of each coating, and therefore, the stability of the whole structure can also be guaranteed. During sequential spreading, various spreading positions are required to be spaced apart by a certain distance for ensuring that next spreading is carried out after a coating formed through the previous spreading becomes flat.

Certainly, the first liquid crystal coating 301 and the high polymer material coating 302 may also be formed simultaneously via once-through spreading; here, there is a need for design of nozzles and flow channels for spreading to allow simultaneous outflowing of different materials for spreading; and in this way, the steps of spreading may be simplified with improved production efficiency.

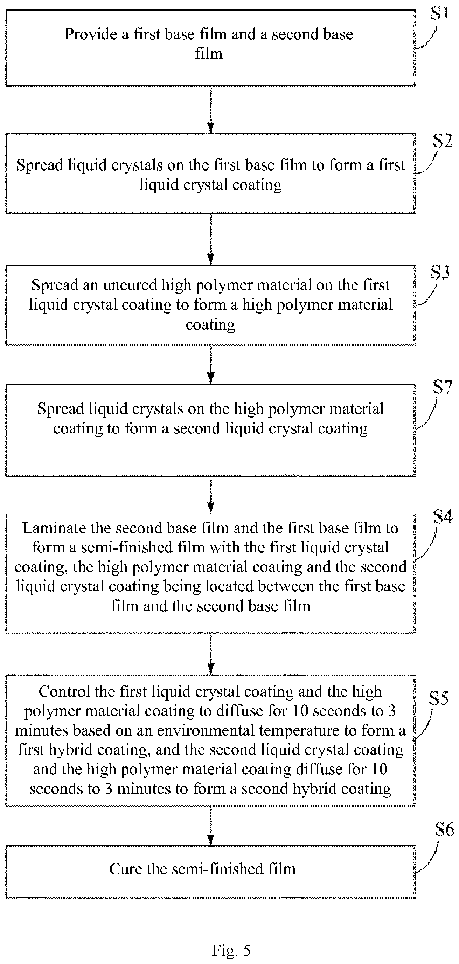

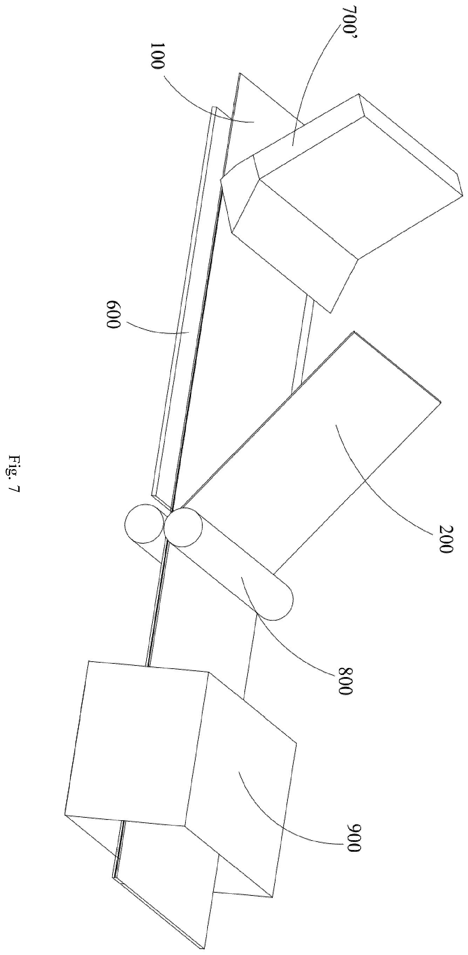

To obtain the liquid crystal writing film as shown in Fig. 3, in an embodiment of the method for preparation of the liquid crystal writing film of the present invention, step S7, i.e., spreading liquid crystals on the high polymer material coating 302 to form a second liquid crystal coating 303, may be executed prior to laminating the second base film 200 and the first base film 100. In execution of step S5, the second liquid crystal coating and the high polymer material coating also diffuse for 10 seconds to 3 minutes simultaneously to form a second hybrid coating. The detailed process of this embodiment is as shown in Fig. 5. The liquid crystals herein are the same as the liquid crystals in step 2. After the spreading is completed, the liquid crystals in the first liquid crystal coating 301 are mixed with the high polymer material in the high polymer material coating 302, and the liquid crystals in the second liquid crystal coating 303 are also mixed with the high polymer material in the high polymer material coating 302, such that, after curing, the first hybrid layer 310 in the liquid crystal writing film as shown in Fig. 3 is formed at the first hybrid coating, while the high polymer material layer 320 in the liquid crystal writing film as shown in Fig. 3 at the high polymer material coating 302 and the second hybrid layer 330 in the liquid crystal writing film as shown in Fig. 3 at the second hybrid coating. Certainly, in this embodiment, the first liquid crystal coating 301, the high polymer material coating 302 and the second liquid crystal coating 303 may be formed through sequential spreading. In that case, the high polymer material coating 302 may be formed after the first liquid crystal coating 301 becomes flat, and the second liquid crystal coating 303 may be formed after the high polymer material coating 302 becomes flat, thus allowing good stability of each coating, and therefore, the stability of the whole structure can also be guaranteed. Certainly, the first liquid crystal coating 301, the high polymer material coating 302 and the second liquid crystal coating 303 may also be formed simultaneously via once-through spreading, which may be understood in conjunction with Fig. 7; here, there is a need for design of nozzles and flow channels for spreading to allow simultaneous outflowing of different materials for spreading; and in this way, the steps of spreading may be simplified with improved production efficiency.

Referring to Fig. 6 or Fig. 7, the present invention further provides a device for preparation of the liquid crystal writing film, comprising a spreading platform 600, a spreading unit 700, a laminating unit 800 and a curing unit 900. The spreading platform 600 is configured to carry a first base film 100; the spreading unit 700 is disposed at one side of the spreading platform 600 and provided with a plurality of independent flow channels for spreading that are configured for spreading of liquid crystals and spreading of an uncured high polymer material, respectively; the laminating unit 800 is disposed behind the spreading platform 600 to laminate a second base film 200 and the first base film 100; and the curing unit 900 is disposed behind the laminating unit 800 to cure a laminated liquid crystal writing film.

The device for preparation of the liquid crystal writing film of the present invention is used for implementing the method for preparation of the liquid crystal writing film of the present invention, wherein the spreading platform 600 that may carry the first base film 100 provides an operating platform for spreading; the spreading unit 700 is provided with a plurality of independent flow channels for spreading, allowing separate spreading of liquid crystals and an uncured high polymer material; the laminating unit 800 is able to laminate the first base film 100 and the second base film 200, and the curing unit 900 is able to cure the laminated liquid crystal writing film.

Specifically, in this embodiment, the spreading platform 600 is provided with a conveyor belt to slowly convey the first base film 100 to the laminating unit 800. Nozzles disposed on the spreading unit 700 are above the spreading platform 600, and a plurality of flow channels for spreading are able to independently spray different fluids. The laminating unit 800 is constituted by two rollers and laminates the first base film 100 and the second base film 200 by rolling. The curing device 900 may be an ultraviolet light curing device or a thermal curing device.

With further reference to Fig. 6, in order to form the first liquid crystal coating 301, the high polymer material coating 302 and the second liquid crystal coating 303 through sequential spreading, the spreading unit 700 may be set to comprise a plurality of first pipes 710, with every two adjacent first pipes 710 being spaced apart by a distance and an internal passage of each of the first pipes 710 constituting one of the flow channels for spreading; and a first nozzle 720 is disposed at an end of each of the first pipes 710. A fluid flows in each of the first pipes 710. The various first pipes 710, which do not interfere with each other, can be disposed in different positions of the spreading platform 600, respectively, to achieve sequential spreading of various coatings. In this way, the high polymer material coating 302 may be formed after the first liquid crystal coating 301 becomes flat, and the second liquid crystal coating 303 may be formed after the high polymer material coating 302 becomes flat, thus allowing good stability of each coating, and therefore, the stability of the whole structure can also be guaranteed.

With further reference to Fig. 7 to Fig, 9, in order to form the first liquid crystal coating 301, the high polymer material coating 302 and the second liquid crystal coating 303 simultaneously via once-through spreading, the spreading unit 700' may be set to comprise a second pipe 710' inside which a plurality of independent passages 711 are formed, with each of the passages 711 constituting one of the flow channels for spreading; and a second nozzle 720' is disposed at an end of the second pipe 710', which is provided with a plurality of outlets 721, with each of the outlets 721 communicating with an independent cavity 722 and each of the cavities 722 communicating with one of the passages 711. Each cavity 722 and the corresponding outlet 721 are configured for spreading of a fluid, and therefore, the second pipe 710' and the second nozzle 720' may achieve simultaneous spreading of various fluids so that the first liquid crystal coating 301, the high polymer material coating 302 and the second liquid crystal coating 303 may be formed simultaneously through spreading, thus allowing simplification of the steps of spreading and improvement of the production efficiency.

The above are merely descriptions on part of embodiments or preferred embodiments of the present invention, and the scope of protection of the present invention is defined by the appended claims.

## Claims

1. A liquid crystal writing film, comprising a first base film (100), a composite layer (300) and a second base film (200),
wherein the first base film (100) comprises a first base layer (110) and a first electrode layer (120) disposed in sequence, with the first base layer (110) serving as a writing surface, and the second base film (200) comprises a second electrode layer (210) and a second base layer (220) disposed in sequence, with the composite layer (300, 300', 300") being located between the first electrode layer (120) and the second electrode layer (210);
the composite layer (300) comprises a first hybrid layer (310) of which one side is laminated with the first electrode layer (120); and
the first hybrid layer (310) comprises liquid crystal molecules and a high polymer material, **characterized in that**
the content of the high polymer material in the first hybrid layer (310) decreases gradually from the side far away from the first electrode layer (120) to the side close to the first electrode layer (120).

2. The liquid crystal writing film of claim 1, **characterized in that** the composite layer (300) also comprises a high polymer material layer (320) located between the first hybrid layer (310) and the second electrode layer (210).

3. The liquid crystal writing film of claim 2, **characterized in that** the composite layer (300, 300', 300") also comprises a second hybrid layer (330) located between the high polymer material layer (320) and the second electrode layer (210); and
the second hybrid layer (330) comprises liquid crystal molecules and a high polymer material, with the content of the high polymer material in the second hybrid layer (330) decreasing gradually from the side close to the high polymer material layer (320) to the side close to the second electrode layer (210).

4. The liquid crystal writing film of claim 3, **characterized in that** the high polymer material layer (320) is made from a high polymer material; alternatively, the high polymer material layer (320) comprises a high polymer material and liquid crystal molecules, with the content of the liquid crystal molecules in the high polymer material layer (320) being less than that of the liquid crystal molecules in each of the first hybrid layer (310) and the second hybrid layer (330).

5. The liquid crystal writing film of claim 1, **characterized in that** the first hybrid layer (310) also comprises a chiral dopant.

6. The liquid crystal writing film of claim 5, **characterized in that** the chiral dopant accounts for 25-35% of the total quantity of the liquid crystal molecules and the chiral dopant such that the writing display on the liquid crystal writing film comes in green when viewed from the front and in blue when viewed from the sides; alternatively, the chiral dopant accounts for 6-15% of the total quantity of the liquid crystal molecules and the chiral dopant such that the writing display on the liquid crystal writing film comes in yellow when viewed from the front and in green when viewed from the sides.

7. A method for preparation of a liquid crystal writing film, comprising the steps of:
(S1) providing a first base film (100) comprising a first base layer (110) and a first electrode layer (120), with the first base layer (110) serving as a writing surface, and a second base film (200) comprising a second base layer (220) and a second electrode layer (210);
(S2) spreading liquid crystals on the first base film (100) to form a first liquid crystal coating (301);
(S3) spreading an uncured high polymer material on the first liquid crystal coating (301) to form a high polymer material coating (302);
(S4) laminating the second base film (200) and the first base film (100) to form a semi-finished film with the first liquid crystal coating (301) and the high polymer material coating (302) being located between the first electrode layer (120) of the first base film (100) and the second electrode layer (210) of the second base film (200);
(S5) controlling the first liquid crystal coating (301) and the high polymer material coating (302) to diffuse for 10 seconds to 3 minutes based on an environmental temperature to form a first hybrid coating, such that the content of high polymer material decreases gradually towards the first electrode layer; and
(S6) curing the semi-finished film.

8. The method for preparation of the liquid crystal writing film of claim 7, **characterized in that** the first liquid crystal coating (301) and the high polymer material coating (302) are formed through sequential spreading; alternatively, the first liquid crystal coating (301) and the high polymer material coating (302) are formed simultaneously via once-through spreading.

9. The method for preparation of a liquid crystal writing film of claim 7, **characterized in**, prior to the step of laminating the second base film (200) and the first base film (100) to form a semi-finished film with the first liquid crystal coating (301) and the high polymer material coating (302) being located between the first base film (100) and the second base film (200), also comprising:
(S7) spreading liquid crystals on the high polymer material coating (302) to form a second liquid crystal coating (303),
wherein the second liquid crystal coating (303) is also located between the first base film (100) and the second base film (200) in the step of laminating the second base film (200) and the first base film (100) to form a semi-finished film with the first liquid crystal coating (301) and the high polymer material coating (302) being located between the first base film (100) and the second base film (200); and
the second liquid crystal coating (303) and the high polymer material coating (302) diffuse for 10 seconds to 3 minutes to form a second hybrid coating in the step of controlling the first liquid crystal coating (301) and the high polymer material coating (302) to diffuse for 10 seconds to 3 minutes based on an environmental temperature to form a first hybrid coating.

10. A device for preparation of a liquid crystal writing film, comprising:
a spreading platform (600) configured to carry a first base film (100) comprising a first base layer (110) and a first electrode layer (120) with the first base layer (110) serving as a writing surface; and
a spreading unit (700, 700') provided with a plurality of independent flow channels for spreading that are configured for the spreading of liquid crystals and the spreading of an uncured high polymer material, respectively, on the first base film, arranged such that a layer of uncured high polymer material coating (302) is spread over a layer of a first liquid crystal coating (301);
a laminating unit (800) disposed at one side of the spreading platform (600) to laminate a second base film (200) comprising a second base layer (220) and a second electrode layer (210), and the first base film (100);
a unit, disposed between the spreading unit and a curing unit (900), carrying out a step of controlling the first liquid crystal coating (301) and the high polymer material coating (302) to diffuse for 10 seconds to 3 minutes based on environmental temperature, such that the content of high polymer material decreases gradually towards the first electrode layer; and the curing unit (900) disposed on the side of the laminating unit (800) that is far away from the spreading unit (700, 700') to cure a laminated liquid crystal writing film.

11. The device for preparation of the liquid crystal writing film of claim 10, **characterized in that** the spreading unit (700, 700') comprises a plurality of first pipes (710), with every two adjacent first pipes (710) being spaced apart by a distance and an internal passage of each of the first pipes (710) constituting one of the flow channels for spreading; and a first nozzle (720) is disposed at an end of each of the first pipes (710).

12. The device for preparation of the liquid crystal writing film of claim 10, **characterized in that** the spreading unit (700, 700') comprises a second pipe (710') inside which a plurality of independent passages (711) are formed, with each of the passages (711) constituting one of the flow channels for spreading; and a second nozzle (720') is disposed at an end of the second pipe (710'), which is provided with a plurality of outlets (721), with each of the outlets communicating with an independent cavity (722) and each of the cavities (722) communicating with one of the passages (711).

## Patentansprüche

1. Flüssigkristallschreibfilm, umfassend einen ersten Basisfilm (100), eine Verbundschicht (300) und einen zweiten Basisfilm (200),
wobei der erste Basisfilm (100) eine erste Basisschicht (110) und eine erste Elektrodenschicht (120) umfasst, die nacheinander angeordnet sind, wobei die erste Basisschicht (110) als Schreibfläche dient, und der zweite Basisfilm (200) eine zweite Elektrodenschicht (210) und eine zweite Basisschicht (220) umfasst, die nacheinander angeordnet sind, wobei sich die Verbundschicht (300, 300', 300") zwischen der ersten Elektrodenschicht (120) und der zweiten Elektrodenschicht (210) befindet;
die Verbundschicht (300) eine erste Hybridschicht (310) umfasst, von der eine Seite mit der ersten Elektrodenschicht (120) laminiert ist; und
die erste Hybridschicht (310) Flüssigkristallmoleküle und ein hochpolymeres Material umfasst,
**dadurch gekennzeichnet, dass**
der Gehalt des hochpolymeren Materials in der ersten Hybridschicht (310) von der von der ersten Elektrodenschicht (120) entfernten Seite zu der Seite nahe der ersten Elektrodenschicht (120) allmählich abnimmt.

2. Flüssigkristallschreibfilm nach Anspruch 1, **dadurch gekennzeichnet, dass** die Verbundschicht (300) auch eine Hochpolymermaterialschicht (320) umfasst, die zwischen der ersten Hybridschicht (310) und der zweiten Elektrodenschicht (210) angeordnet ist.

3. Flüssigkristallschreibfilm nach Anspruch 2, **dadurch gekennzeichnet, dass** die Verbundschicht (300, 300', 300") auch eine zweite Hybridschicht (330) umfasst, die zwischen der Hochpolymermaterialschicht (320) und der zweiten Elektrodenschicht (210) angeordnet ist; und
die zweite Hybridschicht (330) Flüssigkristallmoleküle und ein hochpolymeres Material umfasst, wobei der Gehalt des hochpolymeren Materials in der zweiten Hybridschicht (330) von der Seite nahe der Hochpolymermaterialschicht (320) zu der Seite nahe der zweiten Elektrodenschicht (210) allmählich abnimmt.

4. Flüssigkristallschreibfilm nach Anspruch 3, **dadurch gekennzeichnet, dass** die Hochpolymermaterialschicht (320) aus einem hochpolymeren Material hergestellt ist; alternativ dazu umfasst die Hochpolymermaterialschicht (320) ein hochpolymeres Material und Flüssigkristallmoleküle, wobei der Gehalt der Flüssigkristallmoleküle in der Hochpolymermaterialschicht (320) geringer ist als der der Flüssigkristallmoleküle sowohl in der ersten Hybridschicht (310) als auch in der zweiten Hybridschicht (330).

5. Flüssigkristallschreibfilm nach Anspruch 1, **dadurch gekennzeichnet, dass** die erste Hybridschicht (310) auch einen chiralen Dotierstoff umfasst.

6. Flüssigkristallschreibfilm nach Anspruch 5, **dadurch gekennzeichnet, dass** der chirale Dotierstoff 25 bis 35 % der Gesamtmenge der Flüssigkristallmoleküle und des chiralen Dotierstoffs ausmacht, sodass die Schreibanzeige auf dem Flüssigkristallschreibfilm bei Betrachtung von vorn grün und bei Betrachtung von den Seiten blau erscheint; alternativ dazu macht der chirale Dotierstoff 6 bis 15 % der Gesamtmenge der Flüssigkristallmoleküle und des chiralen Dotierstoffs aus, sodass die Schreibanzeige auf dem Flüssigkristallschreibfilm bei Betrachtung von vorn gelb und bei Betrachtung von den Seiten grün erscheint.

7. Verfahren zur Herstellung eines Flüssigkristallschreibfilms, umfassend die folgenden Schritte:
(S1) Bereitstellen eines ersten Basisfilms (100), der eine erste Basisschicht (110) und eine erste Elektrodenschicht (120) umfasst, wobei die erste Basisschicht (110) als eine Schreibfläche dient, und eines zweiten Basisfilms (200), der eine zweite Basisschicht (220) und eine zweite Elektrodenschicht (210) umfasst;
(S2) Verteilen von Flüssigkristallen auf dem ersten Basisfilm (100), um eine erste Flüssigkristallbeschichtung (301) zu bilden;
(S3) Verteilen eines ungehärteten hochpolymeren Materials auf der ersten Flüssigkristallbeschichtung (301), um eine Hochpolymermaterialbeschichtung (302) zu bilden;
(S4) Laminieren des zweiten Basisfilms (200) und des ersten Basisfilms (100), um einen halbfertigen Film zu bilden, wobei sich die erste Flüssigkristallbeschichtung (301) und die Hochpolymermaterialbeschichtung (302) zwischen der ersten Elektrodenschicht (120) des ersten Basisfilms (100) und der zweiten Elektrodenschicht (210) des zweiten Basisfilms (200) befinden;
(S5) Steuern der ersten Flüssigkristallbeschichtung (301) und der Hochpolymermaterialbeschichtung (302) so, dass sie auf der Grundlage einer Umgebungstemperatur 10 Sekunden bis 3 Minuten lang diffundieren, um eine erste Hybridbeschichtung zu bilden, derart, dass der Gehalt an hochpolymerem Material zur ersten Elektrodenschicht hin allmählich abnimmt; und
(S6) Aushärten des halbfertigen Films.

8. Verfahren zur Herstellung des Flüssigkristallschreibfilms nach Anspruch 7, **dadurch gekennzeichnet, dass** die erste Flüssigkristallbeschichtung (301) und die Hochpolymermaterialbeschichtung (302) durch aufeinanderfolgendes Verteilen gebildet werden; alternativ werden die erste Flüssigkristallbeschichtung (301) und die Hochpolymermaterialbeschichtung (302) gleichzeitig durch einmaliges Verteilen gebildet.

9. Verfahren zur Herstellung eines Flüssigkristallschreibfilms nach Anspruch 7, **dadurch gekennzeichnet, dass** es vor dem Schritt des Laminierens des zweiten Basisfilms (200) und des ersten Basisfilms (100) zur Bildung eines halbfertigen Films mit der ersten Flüssigkristallbeschichtung (301) und der Hochpolymermaterialbeschichtung (302), die sich zwischen dem ersten Basisfilm (100) und dem zweiten Basisfilm (200) befinden, ebenfalls umfasst:
(S7) Verteilen von Flüssigkristallen auf der Hochpolymermaterialbeschichtung (302), um eine zweite Flüssigkristallbeschichtung (303) zu bilden,
wobei sich die zweite Flüssigkristallbeschichtung (303) auch zwischen dem ersten Basisfilm (100) und dem zweiten Basisfilm (200) in dem Schritt des Laminierens des zweiten Basisfilms (200) und des ersten Basisfilms (100) zur Bildung eines halbfertigen Films befindet, und wobei sich die erste Flüssigkristallbeschichtung (301) und die Hochpolymermaterialbeschichtung (302) zwischen dem ersten Basisfilm (100) und dem zweiten Basisfilm (200) befinden; und
in dem Schritt des Steuerns der ersten Flüssigkristallbeschichtung (301) und der Hochpolymermaterialbeschichtung (302) so, dass sie auf der Grundlage einer Umgebungstemperatur 10 Sekunden bis 3 Minuten lang diffundieren, um eine erste Hybridbeschichtung zu bilden, die zweite Flüssigkristallbeschichtung (303) und die Hochpolymermaterialbeschichtung (302) für 10 Sekunden bis 3 Minuten diffundieren, um eine zweite Hybridbeschichtung zu bilden.

10. Vorrichtung zur Herstellung eines Flüssigkristallschreibfilms, umfassend:
eine Verteilungsplattform (600), die dazu ausgelegt ist, einen ersten Basisfilm (100) zu tragen, der eine erste Basisschicht (110) und eine erste Elektrodenschicht (120) umfasst, wobei die erste Basisschicht (110) als eine Schreibfläche dient; und
eine Verteilungseinheit (700, 700'), die mit einer Mehrzahl von unabhängigen Strömungskanälen zum Verteilen versehen ist, die für das Verteilen von Flüssigkristallen bzw. das Verteilen eines ungehärteten hochpolymeren Materials auf dem ersten Basisfilm ausgelegt sind, die so angeordnet sind, dass eine Schicht einer Beschichtung aus ungehärtetem hochpolymeren Material (302) über einer Schicht einer ersten Flüssigkristallbeschichtung (301) verteilt wird;
eine Laminiereinheit (800), die an einer Seite der Verteilungsplattform (600) angeordnet ist, um einen zweiten Basisfilm (200), der eine zweite Basisschicht (220) und eine zweite Elektrodenschicht (210) umfasst, und den ersten Basisfilm (100) zu laminieren;
eine Einheit, die zwischen der Verteilungseinheit und einer Aushärtungseinheit (900) angeordnet ist und einen Schritt der Steuerung der ersten Flüssigkristallbeschichtung (301) und der Hochpolymermaterialbeschichtung (302) so ausführt, dass diese auf der Grundlage der Umgebungstemperatur 10 Sekunden bis 3 Minuten lang diffundieren, derart, dass der Gehalt an hochpolymerem Material zur ersten Elektrodenschicht hin allmählich abnimmt; und
wobei die Aushärtungseinheit (900) auf der Seite der Laminiereinheit (800) angeordnet ist, die weit von der Verteilungseinheit (700, 700') entfernt ist, um einen laminierten Flüssigkristallschreibfilm auszuhärten.

11. Vorrichtung zur Herstellung eines Flüssigkristallschreibfilms nach Anspruch 10, **dadurch gekennzeichnet, dass** die Verteilungseinheit (700, 700') eine Mehrzahl von ersten Rohren (710) umfasst, wobei jeweils zwei benachbarte erste Rohre (710) um einen Abstand voneinander beabstandet sind und ein innerer Durchgang jedes der ersten Rohre (710) einen der Strömungskanäle für die Verteilung bildet; und eine erste Düse (720) an einem Ende jedes der ersten Rohre (710) angeordnet ist.

12. Vorrichtung zur Herstellung des Flüssigkristallschreibfilms nach Anspruch 10, **dadurch gekennzeichnet, dass** die Verteilungseinheit (700, 700') ein zweites Rohr (710') umfasst, in dessen Innerem eine Mehrzahl von unabhängigen Durchgängen (711) ausgebildet ist, wobei jeder der Durchgänge (711) einen der Strömungskanäle für die Verteilung bildet; und eine zweite Düse (720') an einem Ende des zweiten Rohrs (710') angeordnet ist, das mit einer Mehrzahl von Auslässen (721) versehen ist, wobei jeder der Auslässe mit einem unabhängigen Hohlraum (722) in Verbindung steht und jeder der Hohlräume (722) mit einem der Durchgänge (711) in Verbindung steht.

## Revendications

1. Film d'écriture à cristaux liquides comprenant un premier film de base (100), une couche composite (300) et un deuxième film de base (200),
où le premier film de base (100) comprend une première couche de base (110) et une première couche électrode (120) agencées en séquence, la première couche de base (110) servant de surface d'écriture, et le deuxième film de base (200) comprend une deuxième couche électrode (210) et une deuxième couche de base (220) agencées en séquence, la couche composite (300, 300', 300") étant positionnée entre la première couche électrode (120) et la deuxième couche électrode (210) ;
la couche composite (300) comprend une première couche hybride (310) dont une face est laminée avec la première couche électrode (120) ; et
la première couche hybride (310) comprend des molécules de cristaux liquides et un matériau haut polymère,
**caractérisé en ce que**
la teneur en le matériau haut polymère dans la première couche hybride (310) diminue graduellement de la face distante de la première couche électrode (120) à la face proche de la première couche électrode (120).

2. Film d'écriture à cristaux liquides de la revendication 1, **caractérisé en ce que** la couche composite (300) comprend également une couche d'un matériau haut polymère (320) positionnée entre la première couche hybride (310) et la deuxième couche électrode (210).

3. Film d'écriture à cristaux liquides de la revendication 2, **caractérisé en ce que** la couche composite (300, 300', 300") comprend également une deuxième couche hybride (330) positionnée entre la couche d'un matériau haut polymère (320) et la deuxième couche électrode (210) ; et
la deuxième couche hybride (330) comprend des molécules de cristaux liquides et un matériau haut polymère, la teneur en le matériau haut polymère dans la deuxième couche hybride (330) diminuant graduellement de la face proche de la couche de matériau haut polymère (320) à la face proche de la deuxième couche électrode (210).

4. Film d'écriture à cristaux liquides de la revendication 3, **caractérisé en ce que** la couche de matériau haut polymère (320) est constituée d'un matériau haut polymère ; ou sinon, la couche de matériau haut polymère (320) comprend un matériau haut polymère et des molécules de cristaux liquides, la teneur en les molécules de cristaux liquides dans la couche de matériau haut polymère (320) étant plus basse que la teneur en les molécules de cristaux liquides dans la première couche hybride (310) et dans la deuxième couche hybride (330).

5. Film d'écriture à cristaux liquides de la revendication 1, **caractérisé en ce que** la première couche hybride (310) comprend également un dopant chiral.

6. Film d'écriture à cristaux liquides de la revendication 5, **caractérisé en ce que** le dopant chiral représente de 25 à 35 % de la quantité totale des molécules de cristaux liquides et du dopant chiral de sorte que l'affichage d'écriture sur le film d'écriture à cristaux liquides apparaît en vert quand visualisé de l'avant et en bleu quand visualisé depuis les côtés ; ou sinon, le dopant chiral représente de 6 à 15 % de la quantité totale des molécules de cristaux liquides et du dopant chiral de sorte que l'affichage d'écriture sur le film d'écriture à cristaux liquides apparaît en jaune quand visualisé de l'avant et en vert quand visualisé depuis les côtés.

7. Procédé de préparation d'un film d'écriture à cristaux liquides comprenant les étapes consistant à :
(S1) se munir d'un premier film de base (100) comprenant une première couche de base (110) et une première couche électrode (120), la première couche de base (110) servant de surface d'écriture, et d'un deuxième film de base (200) comprenant une deuxième couche de base (220) et une deuxième couche électrode (210) ;
(S2) enduire le premier film de base (100) avec des cristaux liquides pour former un premier revêtement à cristaux liquides (301) ;
(S3) enduire p le premier revêtement à cristaux liquides (301) avec un matériau haut polymère non cuit pour former un revêtement d'un matériau haut polymère (302) ;
(S4) laminer le deuxième film de base (200) et le premier film de base (100) pour former un film semi-fini avec le premier revêtement à cristaux liquides (301) et le revêtement de matériau haut polymère (302) positionnés entre la première couche électrode (120) du premier film de base (100) et la deuxième couche électrode (210) du deuxième film de base (200) ;
(S5) contrôler le premier revêtement à cristaux liquides (301) et le revêtement de matériau haut polymère (302) de manière qu'ils diffusent pendant 10 secondes à 3 minutes en fonction d'une température ambiante pour former un premier revêtement hybride tel que la teneur en le matériau haut polymère diminue graduellement dans la direction de la première couche électrode ; et
(S6) cuire le film semi-fini.

8. Procédé de préparation du film d'écriture à cristaux liquides de la revendication 7, **caractérisé en ce que** le premier revêtement à cristaux liquides (301) et le revêtement de matériau haut polymère (302) sont formés par des enductions successives ; ou sinon, le premier revêtement à cristaux liquides (301) et le revêtement de matériau haut polymère (302) sont formés simultanément lors d'une enduction unique.

9. Procédé de préparation du film d'écriture à cristaux liquides de la revendication 7, **caractérisé en ce qu'**avant l'étape de lamination du deuxième film de base (200) et du premier film de base (100) pour former un film semi-fini où le premier revêtement à cristaux liquides (301) et le revêtement de matériau haut polymère (302) sont positionnés entre le premier film de base (100) et le deuxième film de base (200), le procédé comprend également une étape consistant à :
(S7) enduire le revêtement de matériau haut polymère (302) avec des cristaux liquides pour former un deuxième revêtement à cristaux liquides (303),
où le deuxième revêtement à cristaux liquides (303) est également positionné entre le premier film de base (100) et le deuxième film de base (200) lors de l'étape de lamination du deuxième film de base (303) et du premier film de base (100) pour former un film semi-fini où le premier revêtement à cristaux liquides (301) et le revêtement de matériau haut polymère (302) sont positionnés entre le premier film de base (100) et le deuxième film de base (200) ; et
où le deuxième revêtement à cristaux liquides (303) et le revêtement de matériau haut polymère (302) diffusent pendant 10 secondes à 3 minutes pour former un deuxième revêtement hybride lors de l'étape de contrôle du premier revêtement à cristaux liquides (301) et du revêtement de matériau haut polymère (302) de manière qu'ils diffusent pendant 10 secondes à 3 minutes en fonction d'une température ambiante pour former un premier revêtement hybride.

10. Dispositif de préparation d'un film d'écriture à cristaux liquides comprenant :
une plateforme d'enduction (600) conçue pour porter un premier film de base (100) comprenant une première couche de base (110) et une première couche électrode (120), la première couche de base (110) servant de surface d'écriture ; et
une unité d'enduction (700, 700') dotée d'une pluralité de canaux d'écoulement indépendants pour l'enduction qui sont conçus pour enduire le premier film de base avec des cristaux liquides et pour l'enduire avec le matériau haut polymère non cuit, respectivement, et agencés de manière qu'une couche d'un premier revêtement à cristaux liquides (301) est enduite avec une couche d'un revêtement de matériau haut polymère non cuit (302) ;
une unité de lamination (800) située sur un côté de la plateforme d'enduction (600) pour laminer un deuxième film de base (200) comprenant une deuxième couche de base (220) et une deuxième couche électrode (210) et le premier film de base (100) ;
une unité, située entre l'unité d'enduction et une unité de cuisson (900), effectuant une étape de contrôle du premier revêtement de cristaux liquides (301) et du revêtement de matériau haut polymère (302) de manière qu'ils diffusent pendant 10 secondes à 3 minutes en fonction d'une température ambiante pour que la teneur en le matériau haut polymère diminue graduellement dans la direction de la première couche électrode ; et
l'unité de cuisson (900) situé sur le côté de l'unité de lamination (800) qui est distante de l'unité d'enduction (700, 700') pour cuire un film d'écriture à cristaux liquides laminé.

11. Dispositif de préparation d'un film d'écriture à cristaux liquides de la revendication 10, **caractérisé en ce que** l'unité d'enduction (700, 700') comprend une pluralité de premières conduites (710), toutes les deux premières conduites adjacentes (710) étant séparées par une distance et un passage interne de chacune des premières conduites (710) constituant un des canaux d'écoulement pour l'enduction ; et une première buse (720) située à une extrémité de chacune des premières conduites (710).

12. Dispositif de préparation d'un film d'écriture à cristaux liquides de la revendication 10, **caractérisé en ce que** l'unité d'enduction (700, 700') comprend une deuxième conduite (710') à l'intérieur de laquelle une pluralité de passages indépendants (711) sont formés, chacun des passages (711) constituant un des canaux d'écoulement pour l'enduction ; et une deuxième buse (720') située à une extrémité de la deuxième conduite (710') qui est dotée d'une pluralité de sorties (721), chacune des sorties communicant avec une cavité indépendante (722) et chacune des cavités (722) communicant avec un des passages (711).
